# EUROPEAN PATENT APPLICATION

(11) **EP 2 056 192 A1**
(43) Date of publication of application: **06.05.2009**
(21) Application number: 08290466.5
(22) Date of filing: 19.05.2008
(51) Int. Cl.: G06F 5/12, H04L 12/56

(54) **A data element queueing device and associated method**

(71) Applicant: Alcatel Lucent, 75008 Paris (FR)
(72) Inventor: van Ackere, Michel, 9100 Sint-Niklaas (BE); Zharotia, Vipin, 2018 Antwerpen (BE)
(74) Representative: Plas, Axel Ivo Michel

(57) **Abstract**

The present invention relates to a data element queuing device. The queuing device comprises filtering means for accepting or discarding arriving data elements arriving at the queuing device and storage means for holding one or more accepted data elements. The filtering means of the queuing device are adapted for accepting or discarding the arriving data elements based on a data rate of the arriving data elements in comparison with a threshold data rate.

## Description

### Field of the Invention

The present invention generally relates to queues and more in particular to data queues in electronic devices such as communication equipment, processing devices, etc.

### Background of the Invention

Queues are typically used as a form of buffer to receive items, temporarily store them and provide the elements for further processing.

A queue has typically a limited amount of slots or places wherein an item can be stored until it is ready for processing. This is especially true for electronic devices such as communication equipment or processing devices where queues require some sort of memory which is finite in size. A queue can get full when the rate at which data elements arrive at the queue is higher than the rate at which the data elements are removed from the queue. While a queue is full, it can no longer accept new data elements which means that any data element that then arrives at the queue is discarded. As a result, the sender does not receive a reply and may for instance experience service outage or a need to retransmit certain data packets. In summary, existing queue devices are typically designed according to an all or nothing principle depending on whether the queue still has empty slots or is completely full.

It is an objective of the present invention to provide a queue device which is able to limit the occurrence of a full queue and which is able to keep empty slots available for a longer time. It is another objective of the present invention to provide a queuing device which reduces the service outage period during bulk request receipt.

### Summary of the Invention

The objectives of the present invention are realized by and the shortcomings of the prior art are overcome by a data element queuing device comprising:
- filtering means for accepting or discarding arriving data elements arriving at the queuing device; and
- storage means for holding one or more queued data elements;
characterized in that the filtering means are adapted for accepting or discarding the arriving data elements based on a data rate of the arriving data elements in comparison with a threshold data rate.

Indeed, by accepting or discarding arriving data elements at a specific rate, rather than always accepting while the queue is not full and discarding only while the queue is full, the queuing device can keep the queue available for a longer time. An advantage of this approach is that the queue fills up much slower in case of burst arrival. During periods of operation where there are no data elements bursts, the queuing device is able to handle the incoming data elements at a specific rate. The present invention therefore follows a principle of acceptable rate or nothing, rather than the all or nothing principle of the prior art solutions.

The arriving data elements are data elements which should be pushed into the storage means of the queuing device. The accepted data elements are data elements which, upon arrival, are pushed into the storage means of the queuing device. Such data elements can for instance be data packets in a communication system such as Internet Protocol (IP) packets, Transmission Control Protocol (TCP) segments or request messages for provisioning of services or bandwidth allocation. In a non-communication system, the queuing device may for instance be used to queue instructions for a processing unit such as a CPU. In general the data elements are pieces of information of any form which are stored temporarily for a reason. Such reasons may include waiting for available processor time, delaying the data element, waiting for playback or output of the data element, etc.

The data rate of the arriving data elements can be defined as the amount of data elements that arrive at the queuing device during a specific period of time such as every second or every minute. The threshold data rate is a number of data elements per period of time which is used to measure whether arriving data elements should be accepted and thus pushed into the storage means of the queuing device or whether the arriving data element should be discarded. If more data elements arrive per time period than the threshold specifies, the queuing device discards arriving data elements, for instance by simply not pushing them into the storage means. Alternatively, the queuing device may be able to send a response to the source of the discarded data element indicating that the data element was discarded in addition to discarding the data element.

Optionally the threshold data rate may be a fixed rate according to the present invention.

A fixed threshold data rate can be configured in the queuing device by a user of the queuing device such as a software developer, hardware developer or operator of communication equipment. In case of communication equipment, a fixed threshold value may be advantageous in order to implement a specific Service Level Agreement. It enables the enforcement of an agreed data rate on arriving data elements. For instance a limited number of requests for service access or bandwidth allocation per second.

The fixed threshold data rate can be defined as a timer which starts after accepting an arriving data element. During the timer countdown, any arriving data element is automatically discarded by the filtering means.

Optionally the threshold data rate may be a variable rate according to the present invention.

Further optionally, the variable rate may be based on the number of queued data elements that are pushed into the storage means.

Further optionally, the variable rate may be based on the rate at which queued data elements are removed from the storage means.

Further optionally, the variable rate may be based on the number of queued data elements that have been pushed into the storage means and the rate at which queued data elements are removed from the storage means.

A fixed threshold data rate may be insufficient under changing conditions. In some situations it may be desirable to have a variable threshold data rate. A variable threshold data rate is able to adapt to the current situation.

A particular example is when the threshold data rate is related to the number of accepted data elements that are pushed into the storage means. In such a situation, it is acceptable to increase the threshold data rate when the storage means are almost empty and decrease the threshold data rate when the storage means are almost full, e.g. filled for 50%, 75% or even more. In general a variable threshold data rate is able to adapt to the current situation, to extend the period during which the queue is not completely full. The threshold data rate may be related to the number of accepted data elements according to a linear function, a quadratic function or even more complex functions.

As an alternative to taking the number of accepted data elements that are pushed into the storage means into account, or in addition thereto, the variable threshold data rate may also be related to the rate at which queued data elements are popped from the storage means. For instance processing means coupled to the queuing device may have a specific rate at which data elements can be processed. By adapting the threshold data rate to the rate of processing, the queuing device can ensure that the queue is filled at the same rate than that it is emptied. In this way the queue is nearly never completely full.

Optionally the data element queuing device according to the present invention may further comprise feedback means for providing feedback information to the filter means, the feedback information being related to the storage means.

Feedback information may be information such as the data rate at which new data elements are pushed into the storage means, the data rate at which queued data elements are popped from the storage means, etc. In general the feedback information is any information which enables the adaptation of a variable threshold data rate to an appropriate value. Such an appropriate value takes into account any values which aid in reducing a full queue, especially during bursts of arriving data elements.

The feedback means may be a direct coupling between the storage means and the filter means over which the storage means and the filter means can communicate to exchange feedback information. However the feedback means may also be a separate element in the queuing device which receives or retrieves information from the storage means and provides such information to the filter means, with or without processing the information. Alternatively, the feedback means may also be able to change the settings of the filter means, such as the threshold data rate rather than providing the feedback information whereon the filter means can change its settings.

The present invention further also relates to a method for use in a data element queuing device comprising the steps of:
- accepting or discarding arriving data elements arriving at the queuing device; and
- holding one or more queued data elements in storage means;
characterized in that accepting or discarding the arriving data elements is based on comparison of a data rate of the arriving data elements with a threshold data rate.

### Brief Description of the Drawings

Fig. 1 illustrates a schematic overview of a hardware implementation of an embodiment of the present invention; and
Fig. 2 illustrates the operation over time of an embodiment of the present invention.

### Detailed Description of Embodiment(s)

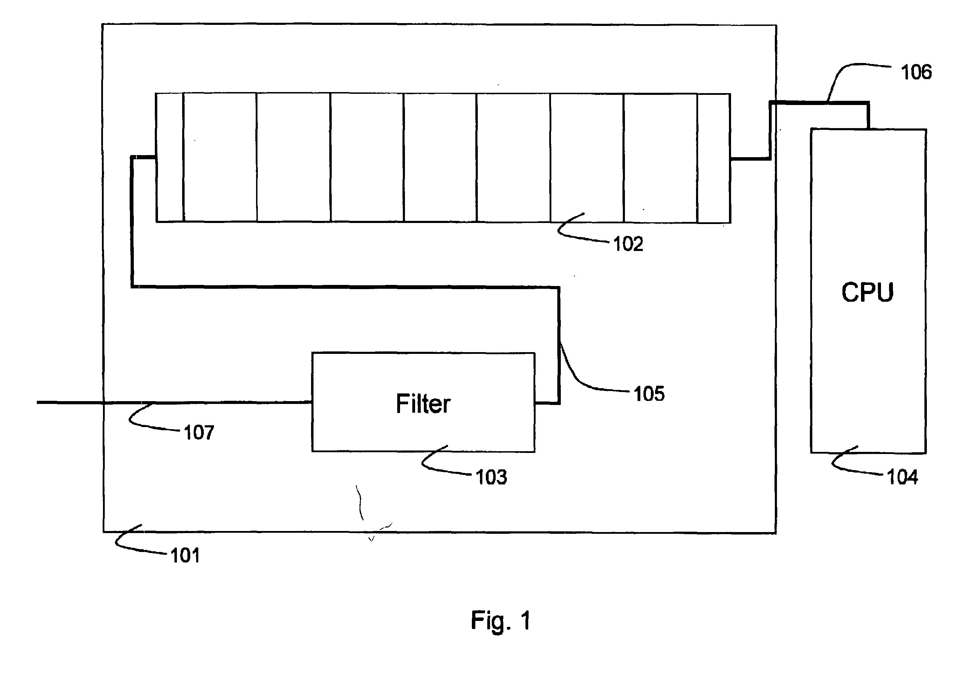

Fig. 1 shows a data element queuing device 101 which contains storage means 102 and a filter 103. The storage means are connected to the filter 103 via a connection 105 and the storage means are connected to a processing unit such as CPU 104 via connection 106. The processing unit 104 may be part of the queuing module 102, or may be an external part as is shown in Fig. 1. The device 101 furthermore contains a connection 107 over which arriving data elements are received.

The filter 103 determines whether an arriving data element is accepted and pushed into storage means 102 or whether an arriving data element is discarded. The filter 103 is able to determine the data rate at which data elements are received and is able to compare that rate with a threshold data rate. Depending on the comparison, the filter 103 is able to decide whether to accept or reject a date element. The threshold value can be configured in the filter by a configuration interface on the filter (not shown in Fig. 1) or may be embedded in the filter 103 during production of the queuing device 101. Alternatively the filter 103 may be able to recognize control instructions received over connection 107 which then can be used to configure the value of the threshold data rate and possible other configuration parameters. An example of such other configuration parameters is an indication that a variable threshold value is to be used instead of a fixed threshold data rate. The filter 103 may also be configured to use a specific type of variable threshold data rate such as a threshold dependant on the number of data elements in the queue 102, the fill-rate of the queue 102, the data rate at which the processing unit 104 is able to retrieve information from the storage means 102. The processing unit 104 may be connected to the filter 103 directly via a connection which is not shown in Fig. 1. The processing unit 104 can use such connection to provide information about the rate at which data elements are popped from the queue 102 for processing, either the current rate or the theoretical rate which can be achieved by the processing unit 104, or other information which the filter 103 may use for filtering data elements.

The implementation of filter 103 in its most basic form is that of a timer which is triggered each time a data element is accepted into queue 102. The timer runs for a period of time wherein all arriving data elements will be discarded. The period of time can be a function of the number of data elements in the queue 102, for instance Pᵥₐᵣ(n) = A * n or Pᵥₐᵣ(n) = A*n² wherein n represents the number of elements in queue 102, *A* represents a non-null coefficient and *Pᵥₐᵣ* is a period of time. Pᵥₐᵣ may be expressed in a number of second, tenths of a second, minutes, etc. The coefficient A may for instance be used to achieve an acceptable data rate, by multiplying n by a factor of thousand or a million to approximate the number of operations per second that the processing unit is able to achieve.

The storage means or queue 102 contains a number of slots wherein data elements can be stored until they are removed from the queue 102 by processing unit 104. Although Fig. 1 shows 7 slots for data elements, a queue in general is able to hold more than 7 data elements. The illustrated queue should therefore not be considered as limited to 7 slots but may as well consists of 8, 128, 1024 or more slots. The queue 102 may be a specific piece of hardware designed as a queue with slots, or may be a general purpose memory which is used as a queue. The queue 102 is able to handle push operations and pop operations for further processing. In an alternative embodiment, the queue 102 may also be able to provide information to filter 103 via connection 105 concerning the number of data elements in the queue 102 or the data rate at which data elements are popped from queue 102.

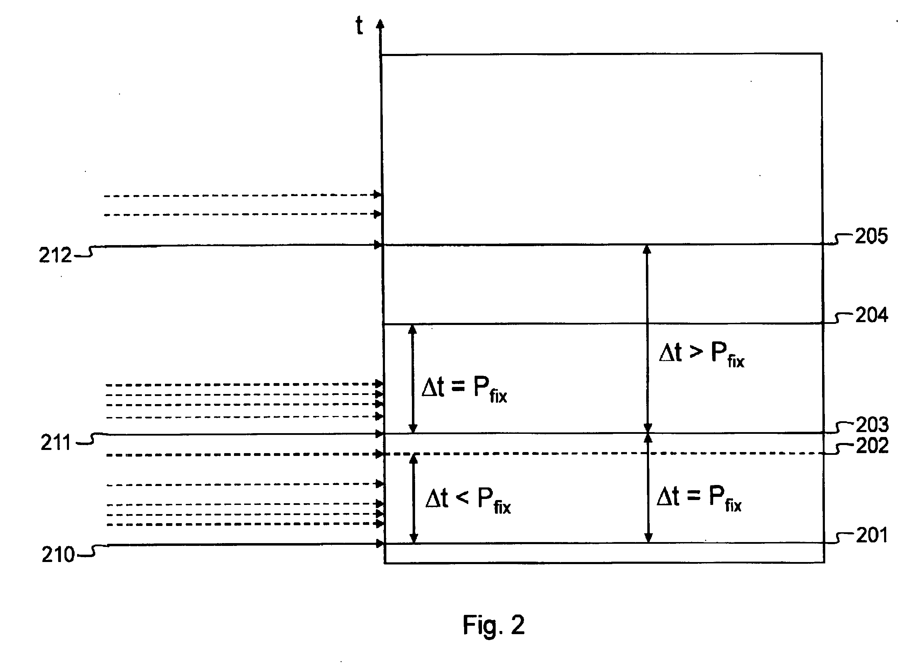

Fig. 2 illustrates the operation of an embodiment of a queuing device according to the present invention over time. The dashed arrows pointing towards timeline t indicate arriving data elements which are rejected by the filter means. The full arrows arriving at the timeline t are arriving data elements which are accepted by the filtering means.
Fig. 2 shows a first data element 210 which arrives at the queuing device at a given point in time 201. From that point in time, a period P_{fix} starts wherein all data packets that arrive at the queuing device are discarded. After Δt=P_{fix} data element 211 arrives at time 203 and is also accepted. Fig. 2 shows a number of data elements which arrive between data element 210 and data element 211. These data elements arrive between time 201 and time 203, such as at time 202 which is during the period P_{fix} and thus these data elements are discarded. After the arrival and accepting of data element 211, period P_{fix} starts over again until time 204. Any data element arriving between time 203 and time 204 is discarded by the filter. Data element 212 which is the first data element that arrives after time 204 at time 205 is accepted because At > P_{fix}. After time 205, period P_{fix} starts over again during which arriving data elements will be discarded and so on.

Although Fig. 2 shows a fixed period of time P_{fix}, the period of time between accepting two arriving data elements may also be variable. Thus the length of time between accepting the first and the second data element may be longer or shorter than the period of time between accepting the second and the third data element.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The preset embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfill the functions of several means recited in the claims. Any reference signs in the claims shall not be construed as limiting the respective claims concerned. The terms "first", "second", third", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences different from the one(s) described or illustrated above.

## Claims

1. A data element queuing device comprising:
- filtering means for accepting or discarding arriving data elements arriving at said queuing device; and
- storage means for holding one or more queued data elements;
**characterized in that** said filtering means are adapted for accepting or discarding said arriving data elements based on a data rate of said arriving data elements in comparison with a threshold data rate.

2. The data element queuing device as defined in claim 1,
**characterized in that** said threshold data rate is a fixed rate.

3. The data element queuing device as defined in claim 1,
**characterized in that** said threshold data rate is a variable rate.

4. The data element queuing device as defined in claim 3,
**characterized in that** said variable rate is based on the number of queued data elements that have been pushed into said storage means.

5. The data element queuing device as defined in claim 3,
**characterized in that** said variable rate is based on the rate at which queued data elements are removed from said storage means.

6. The data element queuing device as defined in claim 3,
**characterized in that** said variable rate is based on the number of queued data elements that have been pushed into said storage means and the rate at which queued data elements are removed from said storage means.

7. The data element queuing device as defined in claim 1,
**characterized in that** said device further comprises feedback means for providing feedback information to said filter means, said feedback information being related to said storage means.

8. A method for use in a data element queuing device comprising the steps of:
- accepting or discarding arriving data elements arriving at said queuing; and
- holding one or more queued data elements in storage means;
**characterized in that** accepting or discarding said arriving data elements is based on comparison of a data rate of said arriving data elements with a threshold data rate.
